(19) 
**Europäisches Patentamt**
**European Patent Office**
**Office européen des brevets**

(11) **EP 2 262 041 A1**

(12) **EUROPEAN PATENT APPLICATION**
published in accordance with Art. 153(4) EPC

(43) Date of publication:
**15.12.2010 Bulletin 2010/50**

(51) Int Cl.:
**H01M 4/13** (2010.01)   **H01M 4/134** (2010.01)

(21) Application number: **10745930.7**

(22) Date of filing: **17.02.2010**

(86) International application number:
**PCT/JP2010/000975**

(87) International publication number:
**WO 2010/098043 (02.09.2010 Gazette 2010/35)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **27.02.2009 JP 2009046228**

(71) Applicant: **Panasonic Corporation**
**Kadoma-shi**
**Osaka 571-8501 (JP)**

(72) Inventors:
• **YAMAMOTO, Taisuke**
**1-61 Shiromi 2-chome,**
**Chuo-ku,**
**Osaka-shi,**
**Osaka,**
**5406207 (JP)**

• **UGAJI, Masaya**
**1-61 Shiromi 2-chome,**
**Chuo-ku,**
**Osaka-shi,**
**Osaka,**
**5406207 (JP)**
• **KINOSHITA, Masahiro**
**1-61 Shiromi 2-chome,**
**Chuo-ku,**
**Osaka-shi,**
**Osaka,**
**5406207 (JP)**

(74) Representative: **TBK-Patent**
**Bavariaring 4-6**
**80336 München (DE)**

(54) **NEGATIVE ELECTRODE FOR NONAQUEOUS ELECTROLYTE SECONDARY BATTERY, AND NONAQUEOUS ELECTROLYTE SECONDARY BATTERY**

(57)   Provided are a negative electrode 1 for a non-aqueous electrolyte secondary battery and a non-aqueous electrolyte secondary battery including the negative electrode 1 for a non-aqueous electrolyte secondary battery, the negative electrode 1 including: a negative electrode current collector 10; and a plurality of columns 13 of alloy-formable active material being capable of absorbing and desorbing lithium ions and being supported on the surface of the negative electrode current collector 10 so as to extend outward; a polymer layer 15 including a lithium-ion permeable resin and being formed on the outer surface of each column 13 of alloy-formable active material, the polymer layer 15 having a thickness capable of leaving gaps 17 between the columns 13 of alloy-formable active material adjacent to each other unfilled.

Fig.1

**Description**

[Technical Field]

The present invention relates to a negative electrode for a non-aqueous electrolyte secondary battery and a non-aqueous electrolyte secondary battery. More specifically, the present invention mainly relates to an improvement of a negative electrode for a non-aqueous electrolyte secondary battery including an alloy-formable active material.

[Background Art]

Non-aqueous electrolyte secondary batteries have a high capacity and a high energy density and can be easily made compact and lightweight, and for this reason, are widely used as a power source for electronic equipment, electric equipment, transportation equipment, machining equipment, power storage equipment, and the like. A typical non-aqueous electrolyte secondary battery is a lithium ion secondary battery including a positive electrode including a lithium-cobalt composite oxide, a negative electrode including graphite, and a separator.
Another known negative electrode active material other than graphite is an alloy-formable active material such as silicon, tin, and an oxide or alloy of silicon or tin. The alloy-formable active material absorbs lithium by alloying with lithium and reversibly absorbs and desorbs lithium. The alloy-formable active material has a high discharge capacity. For example, the theoretical discharge capacity of silicon is about 11 times as large as the theoretical discharge capacity of graphite. Therefore, a non-aqueous electrolyte secondary battery using an alloy-formable active material as the negative electrode active material has a high capacity.
The non-aqueous electrolyte secondary battery using an alloy-formable active material as the negative electrode active material (hereinafter also referred to as the "alloy-type secondary battery") exhibits excellent performance at the beginning of use. However, the alloy-type secondary battery has a problem in that troubles, such as the deformation or swelling of the battery itself and the deformation of the electrode, tend to occur with the increase in the number of charge/discharge cycles, resulting in a sharp deterioration in the battery performance. In order to solve this problem, the following proposals have been suggested.
Patent Literature 1 discloses a negative electrode, in which a polymer film layer formed of a polymer support and a crosslinking monomer is provided on the surface of the negative electrode active material layer including lithium alloy particles.

[Citation List]

[Patent Literature]

[PTL 1] Japanese Laid-Open Patent Publication No. 2005-197258

[Summary of Invention]

[Technical Problem]

The present invention intends to provide a non-aqueous electrolyte secondary battery including a negative electrode including an alloy-formable active material, the non-aqueous electrolyte secondary battery which is excellent in cycle characteristics and high output characteristics and in which the occurrence of sharp deterioration in the battery performance with the increase in the number of charge/discharge cycles is suppressed.

[Solution to Problem]

A negative electrode for a non-aqueous electrolyte secondary battery of the present invention includes a negative electrode current collector, and a plurality of columns of alloy-formable active material being capable of absorbing and desorbing lithium ions and being supported on a surface of the negative electrode current collector so as to extend outward, wherein the columns of alloy-formable active material are supported on the surface of the negative electrode current collector with a predetermined spacing held between the columns of alloy-formable active material adjacent to each other, an outer surface of each of the columns of alloy-formable active material is coated with a polymer layer including a lithium-ion permeable resin, and the polymer layer has a thickness capable of leaving gaps unfilled, the gaps being formed between the columns of alloy-formable active material adjacent to each other.
A non-aqueous electrolyte secondary battery of the present invention includes a positive electrode capable of absorbing and desorbing lithium ions, a negative electrode capable of absorbing and desorbing lithium ions, a lithium ion-permeable insulating layer interposed between the positive electrode and the negative electrode, and a lithium ion-conductive non-aqueous electrolyte, wherein the negative electrode is the above-described negative electrode for a non-aqueous electrolyte secondary battery.

[Advantageous Effects of Invention]

By employing a negative electrode for a non-aqueous electrolyte secondary battery of the present invention, it is possible to provide a high capacity non-aqueous electrolyte secondary battery in which deterioration is unlikely to occur even when the number of charge/discharge cycles is increased.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

Fig. 1 is a longitudinal cross-sectional view schematically showing the configuration of a negative electrode for a non-aqueous electrolyte secondary battery of a first embodiment of the present invention.
Fig. 2 is a top view schematically showing the configuration of a negative electrode current collector.
Fig. 3 is a longitudinal cross-sectional view schematically showing the configuration of a negative electrode active material layer.
Fig. 4 is a side perspective view schematically showing the configuration of an electron beam vacuum vapor deposition apparatus for forming the negative electrode active material layer shown in Fig. 3.
Fig. 5 is a longitudinal cross-sectional view schematically showing the configuration of a negative electrode for a non-aqueous electrolyte secondary battery of a second embodiment of the present invention.
Fig. 6 is a longitudinal cross-sectional view schematically showing the configuration of a non-aqueous electrolyte secondary battery of a third embodiment of the present invention.
Fig. 7 is a set of diagrams showing the steps of a production method of a negative electrode current collector.
Fig. 8 is a top view schematically showing the configuration of an essential part of a negative electrode current collector obtained by the production method shown in Fig. 7.
Fig. 9 is an electron micrograph showing a cross-section of a negative electrode for a non-aqueous electrolyte secondary battery obtained in Example 1.
Fig. 10 is an electron micrograph showing a cross-section of a negative electrode for a non-aqueous electrolyte secondary battery obtained in Comparative Example 2.

[Description of Embodiments]

With regard to the alloy-type secondary batteries, the present inventors have studied the cause of the sharp deterioration in the battery performance, and obtained the following findings.
The alloy-formable active material expands and contracts when lithium is absorbed thereto or desorbed therefrom, and generates comparatively large stresses. Because of this, cracks occur at the surface or in the interior of the negative electrode active material layer formed of the alloy-formable active material when the number of charge/discharge cycles is increased. The cracks, if occur, cause surfaces that have not been in direct contact with the non-aqueous electrolyte to appear (hereinafter referred to as "newly-created surfaces"). The newly-created surfaces immediately after appearing are highly reactive.
If the newly-created surfaces immediately after appearing and the non-aqueous electrolyte come in contact with each other, side reaction involving the generation of gas occurs at the newly-created surfaces, to produce a by-product. The produced by-product forms on the surface of the electrode a coating that inhibits charge/discharge reaction, causing the electrode to deteriorate. The generated gas causes the battery to swell. Further, the side reaction at the newly-created surfaces consumes the non-aqueous electrolyte, and the amount of non-aqueous electrolyte in the battery becomes insufficient, resulting in sharp deterioration in the cycle characteristics and high output characteristics.
Based on the foregoing findings, the present inventors have invented a negative electrode for a non-aqueous electrolyte secondary battery in which a negative electrode active material layer including a plurality of columns of alloy-formable active material (hereinafter also simply referred to as "columns") is formed on the surface of the negative electrode current collector, and a polymer layer is formed on the outer surface of each column with the gaps between the columns left unfilled.
There is a possibility that, on the columns of alloy-formable active material, newly-created surfaces appear with the increase in the number of charge/discharge cycles. Even when newly-created surfaces appear, since a polymer layer is formed on the outer surface of each column, the contact of the newly-created surfaces immediately after appearing and the non-aqueous electrolyte is remarkably suppressed. As a result, the generation of gas and the production of a by-product are suppressed.

[First Embodiment]

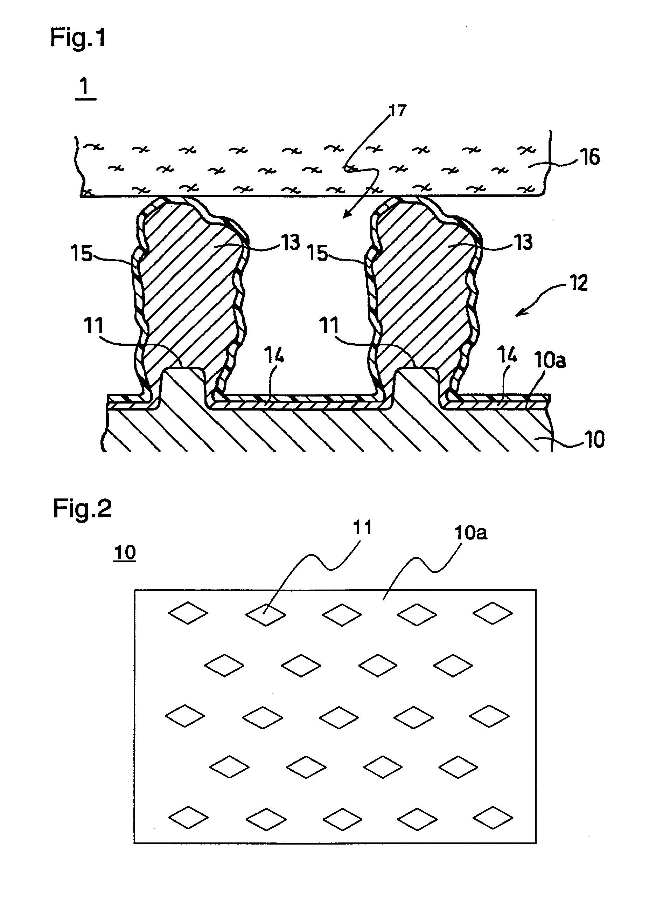

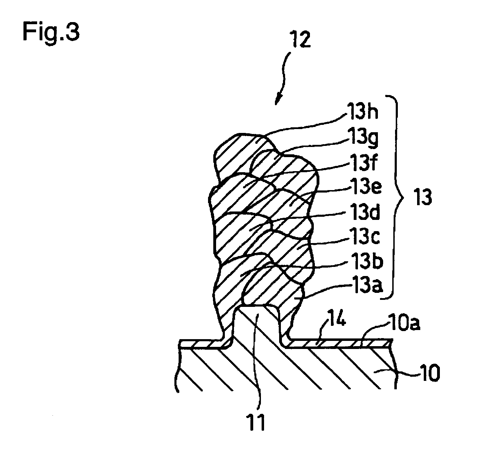

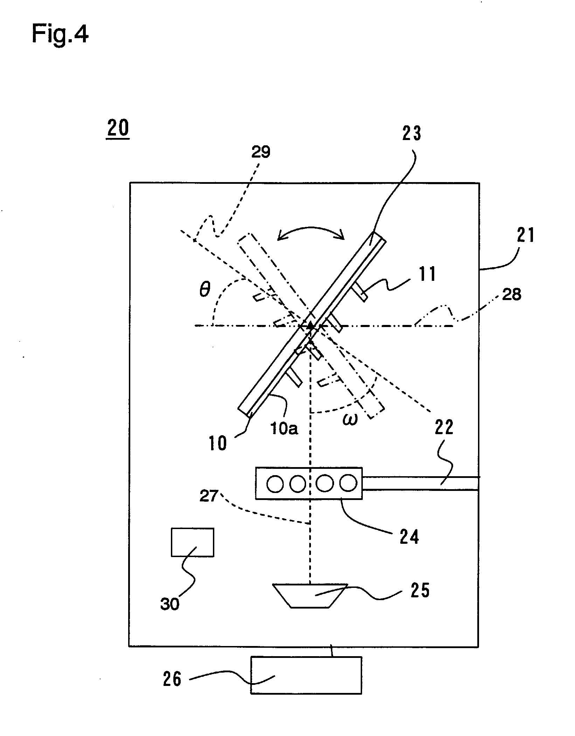

Fig. 1 is a longitudinal cross-sectional view schematically showing the configuration of a negative electrode 1 for a non-aqueous electrolyte secondary battery of a first embodiment of the present invention (hereinafter simply referred to as a "negative electrode 1 "). Fig. 2 is a top view schematically showing the configuration of a negative electrode current collector 10 included in the negative electrode 1 shown in Fig. 1. Fig. 3 is a longitudinal cross-sectional view schematically showing the configuration of a negative electrode active material layer 12 included in the negative electrode 1 shown in Fig. 1. Fig. 4 is a side perspective view schematically showing the configuration of an electron beam vacuum vapor deposition apparatus 20 for forming the negative electrode active material layer 12 shown in Fig. 3.

The negative electrode 1 includes the negative electrode current collector 10, the negative electrode active material layer 12 and a polymer layer 15.

As shown in Fig. 2, a plurality of protrusions 11 are provided on a surface 10a of the negative electrode current collector 10. The plurality of protrusions 11 may be provided on both surfaces of the negative electrode current collector 10. The thickness of the sheet portions of the negative electrode current collector 10 on which no protrusion 11 is formed is not particularly limited, but is usually 1 to 50 $\mu$m. The negative electrode current collector 10 is made of, for example, a metal material such as stainless steel, titanium, nickel, copper, and a copper alloy.

The protrusions 11 are protrusions extending outward from the surface 10a of the negative electrode current collector 10 in its thickness direction (hereinafter simply referred to as the "surface 10a"). The protrusions 11 are arranged on the surface 10a of the negative electrode current collector 10 in a staggered pattern in this embodiment, but not limited thereto, and may be arranged in other patterns such as a grid pattern and a close-packed pattern. Alternatively, the protrusions 11 may be arranged irregularly

The height of the protrusions 11 is preferably 3 to 20 $\mu$m on average. The height of the protrusion 11 is determined on a cross section of the negative electrode current collector 10 in its thickness direction. The cross section of the negative electrode current collector 10 is a cross section thereof including an uppermost endpoint of the protrusion 11 in its extending direction. The height of the protrusion 11 is the length of a perpendicular drawn from the uppermost endpoint to the surface 10a, on the cross section of the negative electrode current collector 10. The average height of the protrusions 11 is determined, for example, by observing the cross section of the negative electrode current collector 10 under a scanning electron microscope to measure the heights of a predetermined number of the protrusions 11 (e.g., 10 to 100 protrusions), and averaging the measured values.

The width of the protrusions 11 is preferably 1 to 50 $\mu$m. The width of the protrusion 11 is the longest length of the protrusion 11 measured parallel to the surface 10a, on the cross section of the negative electrode current collector 10. The width of the protrusions 11 can be measured in the same manner as the height of the protrusions 11, by measuring the longest length of each of a predetermined number of the protrusions 11, and averaging the measured values.

It should be noted that all of the protrusions 11 need not to have the same height and/or the same width.

The shape of the protrusion 11 is a rhombus in this embodiment, but not limited thereto, and may be, for example, a circle, a polygon, an ellipse, a parallelogram, or a trapezoid. The shape of the protrusion 11 is a shape of the protrusion 11 on an orthographic view thereof viewed from vertically above while the surface 10a is aligned with the horizontal plane.

The top of the protrusion 11 (the tip end of the protrusion 11 in the growth direction thereof) is a flat surface in this embodiment, and the flat surface is almost parallel to the surface 10a. The flat surface may have a micron-scale or nanoscale roughness. The bonding strength between the protrusion 11 and the column 13 is enhanced due to the top of the protrusion 11 being a flat surface. The bonding strength is further enhanced due to the flat surface being almost parallel to the surface 10a.

The number of the protrusions 11 and the axis-to-axis distance between the protrusions 11 are selected as appropriate according to the size of the protrusion 11 (e.g., the height, the width), the size of the column 13 formed on the surface of the protrusion 11, and the like. The number of the protrusions 11 is preferably 10,000 protrusions/cm$^2$ to 10,000,000 protrusions/cm$^2$. The axis-to-axis distance between the protrusions 11 is preferably 2 $\mu$m to 100 $\mu$m. Here, when the negative electrode current collector 10 is a belt-like sheet of current collector, the axis-to-axis distance between the protrusions 11 in the lateral direction of the negative electrode current collector 10 is preferably 4 to 30 $\mu$m; and the axis-to-axis distance between the protrusions 11 in the longitudinal direction of the negative electrode current collector 10 is preferably 4 to 40 $\mu$m.

When the shape of the protrusion 11 is a circle, the axis of the protrusion 11 is a virtual line passing through the center of the smallest perfect circle that can enclose the circle and extending perpendicularly to the surface 10a.

When the shape of the protrusion 11 is an ellipse, the axis of the protrusion 11 is a virtual line passing through the point of intersection of the long and short axes of the ellipse and extending perpendicularly to the surface 10a. When the shape of the protrusion 11 is a rhombus, a polygon, a parallelogram, or a trapezoid, the axis of the protrusion 11 is a virtual line passing through the point of intersection of the diagonals of the figure and extending perpendicularly to the surface 10a.

The protrusion 11 may have at least one projection on its surface (at the top and the side). This further enhances the bonding strength between the protrusion 11 and the column 13, and more effectively prevents the separation of the column 13 from the protrusion 11. The projection extends outward from the surface of the protrusion 11, and is smaller in size than the protrusion 11. The three-dimensional shape of the projection is, for example, a cylinder, a prism, a cone, a pyramid, a needle, or a pleat (a ridge shape extending one direction). The pleat-like projection formed on the side surface of the protrusion 11 may extend either in the circumferential direction or in the growth direction of the protrusion 11.

The negative electrode current collector 10 can be produced by utilizing a technique of forming roughness on a metal plate. Examples of the metal plate include metal foil, metal sheet, and metal film. The metal plate may be made of a metal material such as stainless steel, titanium, nickel, copper, and a copper alloy. An exemplary technique of forming roughness on a metal plate is a roller method.

According to a roller method, a roller having a plurality of recesses formed on its surface (hereinafter referred to as a "protrusion-forming roller") is used to mechanically press a metal plate. This provides the negative electrode current collector 10 in which the protrusions 11 corresponding to the size of the recess, the shape of the internal space thereof, the number and arrangement of the recesses are formed on the surface of the metal plate.

When two protrusion-forming rollers are press-fitted to each other, with the axes of the two rollers being arranged parallel to each other so that a press fit portion is formed therebetween, and a metal sheet is passed through the press fit portion, the negative electrode current collector 10 having the protrusions 11 formed on both surfaces thereof in its thickness direction is provided. When a protrusion-forming roller and a roller with smooth surface are press-fitted to each other, with the axes of the two rollers being arranged parallel to each other so that a press fit portion is formed therebetween, and a metal sheet is passed through the press fit portion, the negative electrode current collector 10 having the protrusions 11 formed on one surface thereof in its thickness direction is provided. The press fitting pressure of the rollers is selected as appropriate according to the material and thickness of the metal plate, the shape and size of the protrusions 11, the setting value of the thickness of the negative electrode current collector 10, and the like.

The metal plate may be subjected to surface-roughening treatment before or after processed by rollers. This provides the top of the protrusion 11 with a roughened surface. As a result, the bonding strength between the protrusion 11 and the column 13 is further enhanced. The surface-roughening treatment may be performed, for example, by rough plating or etching.

The protrusion-forming roller is a ceramic roller having recesses formed on its surface. The ceramic roller includes a core roller and a thermal sprayed layer. For the core roller, a roller such as an iron roller and a stainless steel roller may be used. The thermal sprayed layer is formed by thermal spraying a ceramic material such as chromium oxide uniformly on the surface of the core roller. The recesses are formed on the thermal sprayed layer. In forming recesses, a laser used for processing a ceramic material and the like may be used.

A different type of protrusion-forming roller includes a core roller, a base layer, and a thermal sprayed layer. The core roller is the same core roller as included in the ceramic roller. The base layer is a resin layer formed on the surface of the core roller, and the recesses are formed on the surface of the base layer. The base layer is formed by forming recesses on one surface of a resin sheet, and attaching and bonding the resin sheet around the core roller such that the surface of the resin sheet with no recess formed thereon contacts with the surface of the core roller.

The base layer is made of a synthetic resin with high mechanical strength. Examples of such a synthetic resin include thermosetting resins such as unsaturated polyester, thermosetting polyimide, and epoxy resin; and thermoplastic resins such as polyamide, polyether ketone, polyether ether ketone, and fluorocarbon resin.

The thermal sprayed layer is formed by thermal spraying a ceramic material such as chromium oxide on the base layer along the irregularities on the surface thereof. For this reason, it is preferable to form the recesses on the base layer so as to have a size larger than the design size of the protrusions 11, by an amount corresponding to the thickness of the thermal sprayed layer.

Another different type of protrusion-forming roller includes a core roller and a cemented carbide layer. The core roller is the same core roller as included in the ceramic roller. The cemented carbide layer is formed on the surface of the core roller and includes cemented carbide such as tungsten carbide. The cemented carbide layer can be formed by thermal fitting or cool fitting. In the thermal fitting, a cylinder of cemented carbide is warmed to expand, into which the core roller is inserted. In the cool fitting, the core roller is cooled to shrink, and inserted into the cylinder of cemented carbide. The recesses are formed on the surface of the cemented carbide layer by, for example, laser machining.

Yet another type of protrusion-forming roller is a hard iron-based roller having recesses formed on its surface. The hard iron-based roller is a roller in which at least the surface layer thereof is made of high-speed steel, forged steel, and the like. The high-speed steel is an iron-based material made by adding a metal such as molybdenum, tungsten, and vanadium to iron, followed by heating to increase the hardness. The forged steel is an iron-based material made by heating a steel ingot or steel slab, and then tempering and molding it by forging or by rolling and forging, followed by further heating. The steel ingot is made by casting molten steel using a mold. The steel slab is formed from the steel ingot. The forging is performed by using a press or hammer. The recesses are formed by laser machining.

The negative electrode current collector 10 in which the protrusions 11 are arranged regularly is used in this embodiment, but not limited thereto, and a negative electrode current collector in which the protrusions 11 are arranged irregularly may be used. Such a negative electrode current collector may be produced, for example, by applying rough plating, etching, or the like on a metal plate. The metal plate used here may be the same one as used in the roller method.

In the negative electrode 1, the negative electrode active material layer 12 includes the plurality of columns 13 and a plurality of films 14 of alloy-formable active material (hereinafter also simply referred to as "film portions") as shown in Figs. 1 and 3. The plurality of columns 13 and film portions 14 can be formed simultaneously by, for example, a vapor phase method. The specific forming method is described in detail after describing the configuration of the column 13 and the film portion 14.

The column 13 is formed of an alloy-formable active material and supported on the surface of the protrusion 11, and extends outward from the surface of the protrusion 11 on the negative electrode current collector 10. The column 13 extends in a direction perpendicular to or a direction inclined from the perpendicular to the surface 10a of the negative electrode current collector 10. A polymer layer 15 is formed on the outer surface of the column 13.

The height of the columns 13 is preferably 1 to 30 $\mu$m, and more preferably 5 to 25 $\mu$m. The height of the column 13 is the length of a perpendicular drawn from the uppermost endpoint of the top of the column 13 to the top surface of the projection 11. The height of the columns 13 is determined, for example, by observing a cross section of the negative electrode 1 in the thickness direction thereof under a scanning electron microscope, a laser microscope or the like to measure the heights of a predetermined number of the columns 13 (e.g., 10 to 100 columns), and averaging the measured values.

When the columns 13 are too short, there is a possibility that the lithium-absorbing ability of the columns 13 is insufficient, and the effect of the columns 13 to improve the capacity and output of the battery is reduced. When the columns 13 are too high, there is a possibility that the stress generated upon expansion of the alloy-formable active material included in the columns 13 is too large, causing a deformation of the negative electrode current collector 10 and the negative electrode 1, a separation of the column 13 from the protrusion 11, and the like.

The columns 13 are formed by a vapor phase method, and, therefore, the outer surface of each column 13 has an adequate surface roughness. This improves the adhesion between the column 13 and the polymer layer 15. As such, the separation of the polymer layer 15 from the column 13 is reduced, even when the alloy-formable active material included in the columns 13 undergoes repeated changes in volume. As a result, the effect of the polymer layer 15 to protect the newly-created surfaces is maintained over a long period of time.

Gaps 17 are present between a pair of the columns 13 adjacent to each other, the columns each having the polymer layer 15 formed on the outer surface thereof. The gaps 17 absorb the stresses generated due to changes in volume of the alloy-formable active material. As a result, the separation of the column 13 from the protrusion 11, the deformation of the negative electrode current collector 10 and the negative electrode 1, and the like are reduced. In addition, the gaps 17 have a function of retaining the non-aqueous electrolyte. This helps to maintain the battery performance stably at a high level.

Each of the gaps 17 between the columns 13 with the polymer layer 15 formed on the outer surfaces thereof is a very narrow space of 0.5 $\mu$m to 30 $\mu$m in size, and therefore, can easily retain the non-aqueous electrolyte. The non-aqueous electrolyte retained in the gaps 17 is in contact with the separator 16 as well as with the columns 13 and the film portions 14 via the polymer layer 15. As such, the alloy-formable active material included in the columns 13 and the film portions 14 sufficiently comes in contact with the non-aqueous electrolyte. This enables the high output characteristics of the battery and the like to be maintained stably at a high level.

Due to these features, the side reaction between the newly-created surfaces immediately after appearing and the non-aqueous electrolyte is inhibited, and thus the amount of generated by-product and gas to be the cause of troubles such as a shortened life of the negative electrode 1, a deformation of the negative electrode 1 and the battery, and a sharp deterioration in the battery performance is significantly decreased. As a result, the advantage of the alloy-formable active material (i.e., high capacity) is fully exerted, making it possible to provide a non-aqueous electrolyte secondary battery having a high capacity and a high output, being excellent in cycle characteristics and high output characteristics, and having a long service life.

The column 13 is preferably a stack of a plurality of masses of alloy-formable active material (hereinafter also simply referred to as "masses") layered one after another. For example, the column 13 is a stack of masses of alloy-formable active material 13a, 13b, 13c, 13d, 13e, 13f, 13g and 13h, as shown in Fig. 3. The number of layered masses in the column 13 is eight in this case, but is not particularly limited.

The column 13 being such a stack is formed as follows. First, the mass 13a is formed so as to cover the top of the protrusion 11 and part of the side surface continued therefrom. Then, the mass 13b is formed so as to cover the remaining part of the side surface of the protrusion 11 and part of the top of the mass 13a. That is, in Fig. 3, the mass 13a is formed on one edge of the protrusion 11 that includes the top of the protrusion 11. The mass 13b is formed on the other edge of the protrusion 11 with part of the mass 13b overlapping the mass 13a.

The mass 13c is formed so as to cover the remaining part of the top surface of the mass 13a and part of the top surface of the mass 13b. In other words, the mass 13c is formed so as to be mainly in contact with the mass 13a. Further, the mass 13d is formed so as to be mainly in contact with the mass 13b. By layering the masses 13e, 13f, 13g and 13h one after another in the same manner as described above, the column 13 is formed. According to the formation method as described above, the film portions 14 can be formed between the adjacent columns 13 simultaneously with the columns 13. The film portions 14 thus formed contribute to the improvement of the battery capacity.

The film portions 14 are made of the same alloy-formable active material as the columns 13, and are formed on regions of the surface 10a of the negative electrode current collector 11 on which no column 13 is formed. Specifically, the film portions 14 are formed on the surface 10a between the protrusions 11. In the thickness direction of the negative electrode 1, one surface of each film portion 14 is in close contact with the negative electrode current collector 10, and the other end thereof (the outer surface thereof) faces the gap 17 between the columns 13. On the outer surface of each film portion 14 facing the gap 17, the polymer layer 15 is formed.

In other words, the outer surfaces of the film portions 14 are also coated with the polymer layer 15. In addition, the outer surfaces of the film portion 14 have an adequate surface roughness since the film portions 14 are formed by a vapor phase method. As such, the separation of the polymer layer 15 from the film portion 14 is reduced even when the alloy-formable active material included in the film portions 14 undergoes repeated changes in volume. Further, since the film portions 14 face the gaps 17 between the columns 13 with the polymer layers 15 interposed therebetween, the stresses generated therein in association with the changes in volume of the alloy-formable active material are reduced.

Due to these features, even when newly-created surfaces appear on the film portions 14 with the increase in the number of charge/discharge cycles, the side reaction caused by the contact between the newly-created surfaces immediately after appearing and the non-aqueous electrolyte is inhibited. Consequently, the amount of generated by-product and gas to be the cause of troubles such as a shortened life of the negative electrode 1, a deformation of the negative electrode 1 and the battery, and a sharp deterioration in the battery performance is significantly decreased. As a result, the advantage of the alloy-formable active material (i.e., high capacity) is fully exerted, making it possible to provide a non-aqueous electrolyte secondary battery having a high capacity and a high output, being excellent in cycle characteristics and high output characteristics, and having a long service life.

The thickness of the film portions 14 is usually smaller than the height of the columns 13, and is preferably 0.01 $\mu$m to 5 $\mu$m, and more preferably 0.1 $\mu$m to 3 $\mu$m. When the thickness of the film portions 14 is too small, there is a possibility that the lithium absorbing capability of the film portions 14 becomes insufficient, reducing the effect of the film portions 14 to improve the capacity and output of the battery. There also is a possibility that, for example, deposition of Li on the surface 10a occurs since the thickness of the film portions 14 is too small. When the thickness of the film portions 14 is too large, there is a possibility that large stresses are generated when the alloy-formable active material in the film portions 14 expands, resulting in a deformation of the negative electrode current collector 10 and the negative electrode 1, and the like.

The alloy-formable active material included in the columns 13 and the film portions 14 is a material that absorbs lithium ions by alloying with lithium during charging and desorbs lithium ions during discharging, at a negative electrode potential. The alloy-formable active material is preferably amorphous or low crystalline. Examples of the alloy-formable active material include silicon-based active materials and tin-based active materials. The alloy-formable active materials may be used singly or in combination of two or more.

Examples of the silicon-based active materials include silicon, silicon compounds, partial substitution products of these, and solid solutions of the silicon compounds or partial substitution products.

Examples of silicon oxides include silicon oxides represented by the formula: $SiO_a$, where $0.05 < a < 1.95$, silicon carbides represented by the formula: $SiC_b$, where $0 < b < 1$, silicon nitrides represented by the formula: $SiN_c$, where $0 < c < 4/3$, and alloys of silicon and a different element (A). Examples of the different element (A) include Fe, Co, Sb, Bi, Pb, Ni, Cu, Zn, Ge, In, Sn, and Ti. The partial substitution products are a compound in which some of the silicon atoms in silicon or a silicon compound are substituted by a different element (B). Examples of the different element (B) include B, Mg, Ni, Ti, Mo, Co, Ca, Cr, Cu, Fe, Mn, Nb, Ta, V, W, Zn, C, N, and Sn. Among these, silicon and silicon compounds are preferred, and silicon and silicon oxides are more preferred.

Examples of tin-based active materials include tin; tin oxides represented by $SnO_d$, where $0 < d < 2$; tin dioxide ($SnO_2$); tin nitrides; tin-containing alloys such as Ni-Sn alloys, Mg-Sn alloys, Fe-Sn alloys, Cu-Sn alloys, and Ti-Sn alloys; tin compounds such as $SnSiO_3$, $Ni_2Sn_4$, and $Mg_2Sn$; and solid solutions of the above tin oxides, tin nitrides, or tin compounds. Preferred examples of the tin-based active materials include tin oxides, tin-containing alloys, and tin compounds.

The columns 13 and the film portions 14 are formed by a vapor phase method. Examples of the vapor phase method include vacuum vapor deposition, sputtering, ion plating, laser ablation, chemical vapor deposition, plasma chemical vapor deposition, and thermal spray coating. Among these, vacuum vapor deposition is preferred. The formation of the columns 13 and the film portions 14 by vacuum vapor deposition is specifically described below.

The columns 13 and the film portions 14 can be formed by, for example, an electron beam vapor deposition apparatus 20 as shown in Fig. 4 (hereinafter simply referred to as a "vapor deposition apparatus 20"). The vapor deposition apparatus 20 includes a chamber 21, a first pipe 22, a support table 23, a nozzle 24, a target 25, a power source 26, an electron beam generator 30, and a second pipe (not shown).

The chamber 21 is a pressure-resistant container and accommodates in its interior the first pipe 22, the support table 23, the nozzle 24, the target 25, and the electron beam generator 30. One end of the first pipe 22 is connected to the nozzle 24, and the other end thereof is extended outside the chamber 21 and is connected to a raw material gas tank or raw material gas producing apparatus (not shown) via a mass flow controller (not shown). The first pipe 22 supplies a raw material gas to the nozzle 24. The raw material gas is, for example, oxygen or nitrogen.

The support table 23 is a pivotally-supported plate-like member and is capable of holding the negative electrode current collector 10 on one surface thereof in its thickness direction. The support table 23 is tilted alternately so as to move between the positions indicated by the solid line and by the dot-dash line shown in Fig. 4. The position indicated by the solid line is a position where the support table 23 forms an angle $(90 - \omega)° = \theta°$ with a horizontal line 28. The position indicated by the dash-dot line is a position where the support table 23 forms an angle $(180 - \theta)°$ with the horizontal line 28. The angle $\omega°$ formed between a vertical line 27 and a perpendicular line 29 is an incident angle of vapor of the raw material of alloy-formable active material. The perpendicular line 29 is a line passing through the point of intersection of the vertical line 27 and the support table 23 and extending perpendicularly to the surface of the support table 23. The angle $\omega°$ can be selected as appropriate according to the sizes of the protrusion 11 and the column 13 and other factors.

The nozzle 24, to which one end of the first pipe 22 is connected, is disposed between the support table 23 and the target 25 and discharges a raw material gas into the chamber 21. The target 25 accommodates a raw material of alloy-formable active material. The electron beam generator 30 irradiates the raw material of alloy-formable active material accommodated in the target 25 with electron beams, to heat the raw material. This generates vapor of the raw material of alloy-formable active material. The vapor goes up toward the negative electrode current collector 10 and is mixed with the gas discharged from the nozzle 24.

The power source 26 is disposed outside the chamber 21 and applies a voltage to the electron beam generator 30. The second pipe introduces a gas to be the atmosphere in the chamber 21. An electron beam vapor deposition apparatus having the same configuration as that of the vapor deposition apparatus 20 is commercially available from, for example, Ulvac Inc.

The operation of the vapor deposition apparatus 20 is described below, taking as an example the case where the columns 13 and the film portions 14 composed of a silicon oxide are formed on the surface 10a of the negative electrode current collector 10.

According to the vapor deposition apparatus 20, first, the negative electrode current collector 10 is fixed on the support table 23, and oxygen (raw material gas) is introduced into the chamber 21. Next, the target 25 is irradiated with electron beams, to generate vapor of silicon (raw material of alloy-formable active material) therefrom. The vapor goes up vertically upward and is mixed with oxygen in the vicinity of the nozzle 24. The mixture of the vapor and oxygen further goes up to be supplied to the surface 10a of the negative electrode current collector 10 fixed on the support table 23. Consequently, the columns 13 composed of a silicon oxide are formed on the surfaces of the protrusions 11, and the film portions 14 composed of the silicon oxide are formed on regions of the surface 10a of the negative electrode current collector 10 on which no protrusion 11 is formed.

In this process, the masses 13a as shown in Fig. 3 are formed on the surfaces of the protrusions 11 while the support table 23 is set at the position indicated by the solid line. Then, the support table 23 is tilted to the position indicated by the dot-dash line, and the masses 13b as shown in Fig. 3 are formed. In such a manner, the support table 23 is tilted alternately, and the columns 13 each being a stack of eight masses 13a, 13b, 13c, 13d, 13e, 13f, 13g and 13h as shown in Fig. 3 are simultaneously formed on the surfaces of the protrusions 11. Simultaneously with this, the film portions 14 are formed on the regions of the surface 10a of the negative electrode current collector 10 on which no protrusion 11 is formed. The negative electrode active material layer 12 is thus formed, and the negative electrode 1 is obtained.

When the alloy-formable active material is, for example, a silicon oxide represented by $SiO_a$, where $0.05 < a < 1.95$, the column 13 may be formed so as to have a concentration gradient of oxygen in the growing direction of the column 13. Specifically, the rate of oxygen content is set high near the negative electrode current collector 10, and is decreased with distance away from the negative electrode current collector 10. This can further enhance the bonding strength between the protrusion 11 and the column 13 and the bonding strength between the surface 10a and the film portion 14. In the case where no raw material gas is supplied from the nozzle 24, for example, the columns 13 and the film portions 14 composed of silicon or tin are formed.

It should be noted that, prior to forming the polymer layer 15 on the outer surfaces of the columns 13 and the film portions 14, lithium may be vapor deposited in an amount equivalent to the irreversible capacity, to the columns 13 and the film portions 14.

The polymer layer 15 is formed on almost the entire outer surface of each column 13 and on almost the entire outer surface of film portion 14. The polymer layer 15 is formed so as to have a thickness capable of leaving the gaps 17 unfilled, the gaps 17 being present between the columns 13 adjacent to each other. The polymer layer 15 may be also formed on regions of the surface 10a of the negative electrode current collector 10 on which neither protrusion 11 nor film portion 14 is formed (hereinafter referred to as "non-formed regions"). The polymer layer 15 on the non-formed regions is not necessarily provided but is effective, for example, in preventing lithium ions from depositing on the non-formed regions as metal lithium, and thus in preventing the reduction of the battery capacity.

The thickness of the polymer layer 15 may be selected as appropriate depending on where the polymer layer 15 is to be formed. For example, it is preferable to form the polymer layer 15 so as to be comparatively thick at the top surface of the column 13. This is preferable for the following reason. When a direction in which the column 13 grows is termed as a longitudinal direction, and a direction perpendicular to the longitudinal direction is termed as a lateral direction, the expansion of the column 13 in the lateral direction is absorbed by the gaps 17 between the columns 13. However, in the longitudinal direction, the top of the column 13 is in contact with the separator 16, and there is little space therebetween for absorbing the expansion of the column 13 in the longitudinal direction. As a result of forming the polymer layer 15 so at to be comparatively thick at the top surface of the column 13, the expansion of the column 13 in the longitudinal direction is absorbed by the elasticity of the polymer layer 15.

It is preferable that, at the side of the column 13, the polymer layer 15 is formed so as to have a thickness of less than a half of the minimum gap width. By forming the column 13 in such a manner, even when the columns 13 with the polymer layer 15 formed on the outer surface thereof expand, the stress generated by the contact of the columns 13 with each other is reduced, and the separation of the polymer layer 15 from the column 13 and the separation of the column 13 from the protrusion 11 are reduced. In addition, the non-aqueous electrolyte can smoothly flow into the gaps 17 between the columns 13.

The "gap width" as used herein is a length of the gap 17 in the direction parallel to the surface 10a of the negative electrode current collector 10 on a cross section of the negative electrode 1 in its thickness direction. The gap width is preferably 0.5 $\mu$m to 30 $\mu$m, and more preferably 2 $\mu$m to 30 $\mu$m.

When the gap width is too small, there is a possibility that the stress generated by the contact of the columns 13 with each other becomes too large when the columns 13 expand, causing a separation of the polymer layer 15 from the column 13 and a separation of the column 13 from the protrusion 11. There also is a possibility that the flow of the non-aqueous electrolyte into the gaps 17 between the columns 13 is prevented. As a result, the battery performance may deteriorate. When the gap width is too large, there are possibilities of a deterioration in the non-aqueous electrolyte retention capability of the gaps 17, a decrease of the number of the columns 13, and the like, and as a result, the battery performance may deteriorate.

Further, it is preferable to form the polymer layer 15 so as to be comparatively thin at the outer surface of the film portion 14. The expansion stress in the film portion 14 is smaller than that in the column 13, since the thickness of the film portion 14 is comparatively small. In addition, the gap 17 for absorbing the expansion stress is present above the film portion 14. Accordingly, even if the polymer layer 15 is thin, the effect obtained by forming the polymer layer 15 is sufficiently exerted.

The thickness of the polymer layer 15 is selected as appropriate depending on where the polymer layer 15 is to be formed, but is preferably selected from within the range of 0.01 $\mu$m to 20 $\mu$m, and more preferably selected from within the range of 0.1 $\mu$m to 20 $\mu$m. For example, the thicknesses of the polymer layers 15 formed on the side surface of the column 13 and the outer surface of the film portion 14 are preferably set to 0.01 to 10 $\mu$m and more preferably set to 0.1 to 5 $\mu$m; and the thickness of the polymer layer 15 formed on the top of the column 13 is preferably set to 3 to 20 $\mu$m and more preferably set to 5 to 20 $\mu$m. The polymer layer 15 formed on the top of the column 13 is preferably thicker than the polymer layers 15 formed on the side surface of the column 13 and the outer surface of the film portion 14. It suffices if the polymer layer 15 formed on the non-formed region of the negative electrode current collector 10 has a thickness of about 0.01 to 10 $\mu$m.

When the polymer layer 15 is too thin, there is a possibility that the ability of the polymer layer 15 to follow the volumetric expansion of the alloy-formable active material is reduced, causing a reduction of the adhesion of the polymer layer 15 with the column 13 and the film portion 14. As a result, the effect of the polymer layer 15 to protect the newly-created surfaces may deteriorate. When the polymer layer 15 is too thick, there is a possibility that the ion permeability of the polymer layer 15 deteriorates, causing a reduction in the output characteristics, cycle characteristics, storage characteristics, and the like of the battery.

The polymer layer 15 is mainly composed of a synthetic resin and, therefore, has appropriate levels of mechanical strength and flexibility. As such, the polymer layer 15 is hardly deformed while following the volumetric expansion of the alloy-formable active material. Because of this, the adhesion of the polymer layer 15 with the column 13 and the film portion 14 is maintained throughout the workable period of the battery. As a result, even when newly-created surfaces appear with the increase in the number of charge/discharge cycles, it is possible to prevent the newly-created surfaces immediately after appearing from coming in contact with the non-aqueous electrolyte.

The porosity of the polymer layer 15 is preferably 10% to 70%, more preferably 15% to 60%, and furthermore preferably 20% to 35%. When the porosity is too small, there is a possibility that the ion conduction resistance of the polymer layer 15 is increased, causing the high output characteristics and the like to deteriorate. When the porosity is too large, there is a possibility that the mechanical strength of the polymer layer 15 is decreased, causing the polymer layer 15 to be easily separated from the column 13 and the film portion 14.

The porosity can be determined by observation under a scanning electron microscope (SEM). Specifically, SEM observation is performed for image processing, to obtain an image of a cross section of the negative electrode active material layer 12 in its thickness direction. From the image thus obtained, the total area (A) of the gaps 17, and the total area (B) of the polymer layers 15 coating the surfaces of columns 13 are measured. The porosity is calculated from the equation below using the measured values.

$$\text{Porosity (\%)} = \{(A - B)/(A)\} \times 100$$

The porosity can be alternatively measured with a mercury porosimeter. In the measurement of the porosity with a mercury porosimeter, mercury flows into the voids in the polymer layer 15. As such, the porosity (%) is calculated by 100 x {volume of mercury flown into voids / (true volume of the polymer layer 15 + volume of mercury flown into voids)}. The true volume of the polymer layer 15 can be calculated from the mass of the polymer layer 15 and the specific gravity of the synthetic resin composing the polymer layer 15.

The polymer layer 15 has lithium ion permeability and can further have lithium ion conductivity. For example, when the lithium-ion permeable resin being a main component of the polymer layer 15 becomes conductive to lithium ions by swelling upon contact with the non-aqueous electrolyte, the polymer layer 15 has lithium ion conductivity. Further, when the polymer layer 15 includes a lithium salt in addition to a lithium-ion permeable resin being its main component, the polymer layer 15 has lithium ion conductivity. By forming the polymer layer 15 with lithium ion conductivity, the polymer layer 15 will not inhibit the battery reaction.

The polymer layer 15 includes a lithium-ion permeable resin and may further include a lithium salt, as appropriate. The lithium-ion permeable resin is, for example, a synthetic resin that is transformed into a porous body having pores through which lithium ions can pass, when formed into a film. A preferable lithium-ion permeable resin is a resin that becomes conductive to lithium ions by swelling upon contact with the non-aqueous electrolyte (hereinafter also referred to as a "lithium-ion conductive resin"). In the process of battery fabrication, the polymer layer including a lithium-ion conductive resin contacts with the non-aqueous electrolyte, and thus the polymer layer 15 with lithium ion conductivity is obtained.

Examples of the synthetic resin include fluorocarbon resin, polyacrylonitrile, polyethylene oxide, polypropylene oxide, and the like. Among these, fluorocarbon resin is preferred in view of the adhesion of the polymer layer 15 with the column 13 and the film portion 14. These synthetic resins may be used singly or in combination of two or more.

Examples of fluorocarbon resin include polyvinylidene fluoride (hereinafter "PVDF"), a copolymer of vinylidene fluoride (VDF) and an olefinic monomer, and polytetrafluoroethylene. Examples of the olefinic monomer include tetrafluoroethylene, hexafluoropropylene (HFP), and ethylene. Among the examples of fluorocarbon resin, preferred are PVDF, and a copolymer of vinylidene fluoride and an olefinic monomer; more preferred are PVDF, and a copolymer of HFP and VDF; and particularly preferred is PVDF.

For the lithium salt to be added to the polymer layer 15, any lithium salt commonly used in the field of non-aqueous electrolyte secondary batteries may be used. Examples of the lithium salt includes $LiClO_4$, $LiBF_4$, $LiPF_6$, $LiAlCl_4$, $LiSbF_6$, LiSCN, $LiCF_3SO_3$, $LiCF_3CO_3$, $LiAsF_6$, $LiB_{10}Cl_{10}$, lithium lower aliphatic carboxylate, LiCl, LiBr, LiI, $LiBCl_4$, borates, and imide salts. These lithium salts may be used singly or in combination of two or more.

When the lithium-ion permeable resin being a main component of the polymer layer 15 is not a lithium-ion conductivity resin, the polymer layer 15 with lithium ion conductivity is obtained by adding a lithium salt to the polymer layer 15.

The polymer layer 15 can be formed, for example, by applying a polymer solution to the outer surfaces of the columns 13 and the film portions 14 and drying the applied coating. The polymer solution includes a synthetic resin and an organic solvent and includes a lithium salt, an additive, and the like, as appropriate. The polymer solution can be prepared, for example, by dissolving or dispersing a synthetic resin, lithium salt, additive, and the like in an organic solvent.

Examples of the organic solvent include dimethylformamide, dimethylacetamide, methylformamide, N-methyl-2-pyrrolidone (NMP), dimethylamine, acetone, and cyclohexanone. The content of the synthetic resin in the polymer solution can be selected as appropriate according to the type of the synthetic resin, the porosity and thickness of the polymer layer 15 to be obtained, and other factors, but is preferably 0.1% by mass to 25% by mass, and more preferably 1% by mass to 10% by mass. When the content of the synthetic resin is within the foregoing ranges, the polymer layer 15 having a uniform structure throughout the layer can be obtained. In addition, good adhesion of the polymer layer 15 with the outer surfaces of the column 13 and the film portion 14 can be obtained.

Afurther preferred range of the resin concentration in the polymer solution is 2% by mass to 7.5% by mass, and a particularly preferred range is 2.5% by mass to 7% by mass. When the resin concentration is within the foregoing ranges, the gaps 17 between the columns 13 remain unfilled without fail, and the workability in forming the polymer layer 15 on the outer surfaces of the columns 13 and the film portions 15 is further improved.

The polymer solution can be applied onto the outer surfaces of the columns 13 and the film portions 15 by a known method. Examples of the method include screen printing, die coating, comma coating, roller coating, bar coating, gravure coating, curtain coating, spray coating, air knife coating, reverse coating, dip squeeze coating, and dip coating. Among these, dip coating is preferred.

The thickness of the polymer layer 15 can be adjusted by, for example, changing the viscosity and applied amount of the polymer solution, and the dipping time duration, dipping temperature in dip coating. The viscosity of the polymer solution can be adjusted as appropriate by changing parameters such as the content of the synthetic rein in the polymer solution, and the temperature of the polymer solution.

The drying temperature of the coating formed of the polymer solution is usually selected as appropriate from the range of 20°C to 300°C according to the types of the synthetic resin and organic solvent in the polymer solution. For example, when the polymer solution is an NMP solution containing 1 to 10% PVDF by mass, and the temperature of the solution is 15 to 85°C, and when dip coating is employed, the coating may be formed by dipping the negative active material layer 12 in the foregoing solution, and then drying it under vacuum at about 60 to 100°C for about 15 to 30 minutes. As a result, the polymer layer 15 having a thickness of about 0.01 to 10 μm is formed.

[Second Embodiment]

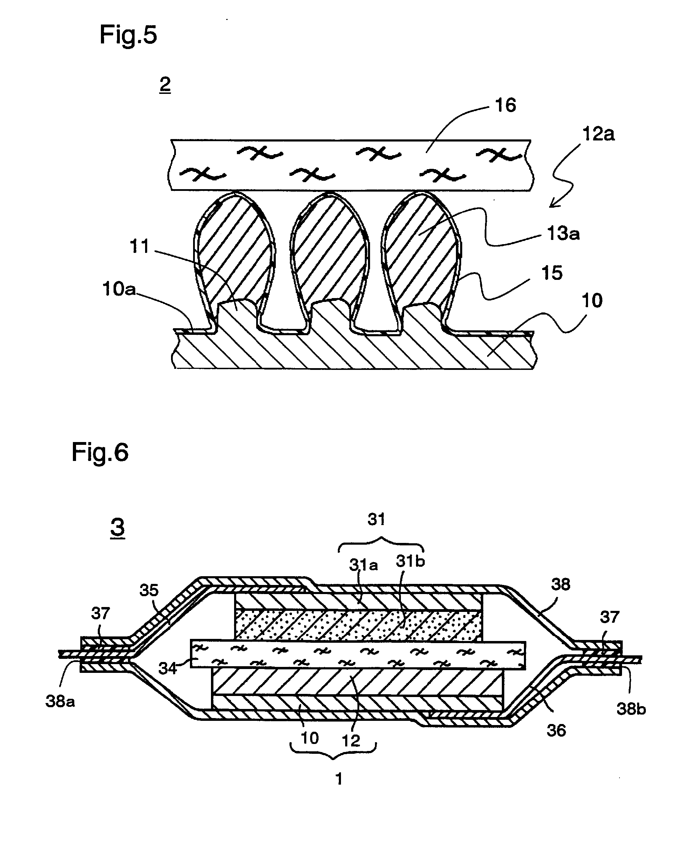

Fig. 5 is a longitudinal cross-sectional view schematically showing the configuration of a negative electrode 2 for a non-aqueous electrolyte secondary battery of a second embodiment of the present invention (hereinafter simply referred to as a "negative electrode 2"). The negative electrode 2 is analogous to the negative electrode 1, and the same components as those of the negative electrode 1 are denoted by the same reference numerals, the descriptions of which are omitted.

The negative electrode 2 is **characterized in that** a negative electrode active material layer 12a includes a plurality ofspindie-shaped columns 13a and has no film portion 14. In the negative electrode 2, the polymer layer 15 is formed on almost the entire outer surface of each spindle-shaped column 13a and on the regions of the surface 10a of the negative electrode current collector 11 on which no protrusion 11 is formed. The other configuration except the above is the same as that of the negative electrode 1. The spindle-shaped columns 13a can be formed in the same manner as the columns 13 by selecting the incidence angle ω in the vapor deposition apparatus 20 and the number of layered masses of alloy-formable active material. The negative electrode 2 provides an effect similar to that provided by the negative electrode 1.

[Third Embodiment]

Fig. 6 is a longitudinal cross-sectional view schematically showing the configuration of a non-aqueous electrolyte secondary battery 3 of a third embodiment of the present invention. The non-aqueous electrolyte secondary battery 3 is a flat battery including a stacked electrode assembly formed by stacking a positive electrode 31 and the negative electrode 1 as shown in Fig. 1 with a separator 34 interposed therebetween, a positive electrode lead 35 connected to the positive electrode 31, a negative electrode lead 36 connected to the negative electrode 1, gaskets 37 respectively sealing openings 38a and 38b of a housing case 38, and the housing case 38 accommodating the stacked electrode assembly and a non-aqueous electrolyte (not shown).

One end of the positive electrode lead 35 is connected to a positive electrode current collector 31a, and the other end thereof is extended out of the non-aqueous electrolyte secondary battery 3 from the opening 38a of the housing case 38. One end of the negative electrode lead 36 is connected to the negative electrode current collector 10, and the other end thereof is extended out of the non-aqueous electrolyte secondary battery 3 from the opening 38b of the housing case 38. For the positive electrode lead 35 and the negative electrode lead 36, any positive or negative electrode lead commonly used in the field of non-aqueous electrolyte secondary batteries may be used. For example, an aluminum lead may be used for the positive electrode lead 35; and a nickel lead may be used for the negative electrode lead 36.

The openings 38a and 38b of the housing case 38 are respectively sealed by the gasket 37. For the gasket 37, gaskets made of various resin materials or rubber materials may be used. The housing case 38 may be made of, for example, a metal material, a synthetic resin, or a laminate film. Each of the openings 38a and 38b of the housing case 38 may be directly sealed without using the gasket 37 by a method such as welding.

The non-aqueous electrolyte secondary battery 3 is fabricated in the following manner. First, one end of the positive electrode lead 35 is connected to the positive electrode current collector 31 a in the electrode assembly, and one end of the negative electrode lead 36 is connected to the negative electrode current collector 10 in the electrode assembly. The electrode assembly is inserted into the housing case 38, the non-aqueous electrolyte is injected into the housing case 38, and the other ends of the positive electrode lead 35 and the negative electrode lead 36 are extended out of the housing case 38. Next, each of the openings 38a and 38b is sealed by welding with the gasket 37 interposed therebetween while the internal pressure of the housing case 38 is reduced to a near vacuum. The non-aqueous electrolyte secondary battery 3 is thus fabricated.

The positive electrode 31 includes the positive electrode current collector 31 a, and a positive electrode active material layer 31b supported on the surface of the positive electrode current collector 31a.

For the positive electrode current collector 31a, an electrically conductive substrate is used. The conductive substrate may be made of, for example, a metal material such as stainless steel, titanium, aluminum, and an aluminum alloy, or a conductive resin. The conductive substrate may be in the form of a non-porous plate or a porous plate. Examples of the non-porous plate include foil, sheet, and film. Examples of the porous plate include mesh, net, punched sheet, lath, porous body, foam, and nonwoven fabric. The thickness of the conductive substrate is not particularly limited, but, for example, is usually 1 to 500 $\mu$m and preferably 1 to 50 $\mu$m.

The positive electrode active material layer 31b includes a positive electrode active material capable of absorbing and desorbing lithium ions and is formed on one surface or both surfaces of the positive electrode current collector 31a. For the positive electrode active material, any positive electrode active material capable of absorbing and desorbing lithium ions may be used. Examples of such positive electrode active material include lithium-containing composite oxides, and olivine-type lithium phosphates.

Lithium-containing composite oxides are a metal oxide containing lithium and a transition metal element, or a metal oxide in which part of the transition metal element in the foregoing metal oxide is substituted by a different element. Examples of the transition metal element include Sc, Y, Mn, Fe, Co, Ni, Cu, and Cr. Preferable examples of the transition metal element include Mn, Co, and Ni.

Examples of the different element include Na, Mg, Zn, Al, Pb, Sb, and B. Preferable examples of the different element include Mg and Al. These transition metal elements may be used singly or in combination of two or more; and these different elements may be used singly or in combination of two or more.

Examples of lithium-containing composite oxides include $Li_\ell CoO_2$, $Li_\ell NiO_2$, $Li_\ell MnO_2$, $Li_\ell Co_m Ni_{1-m} O_2$, $Li_\ell Co_m M_{1-m} O_n$,

$Li_\ell Ni_{1-m} M_m O_n$, $Li_\ell Mn_2 O_4$, and $Li_\ell Mn_{2-m} M_n O_4$, where M represents at least one element selected from the group consisting of Na, Mg, Sc, Y, Mn, Fe, Co, Ni, Cu, Zn, Al, Cr, Pb, Sb, and B, $0 < \ell \le 1.2$, $0 \le m \le 0.9$, and $2.0 \le n \le 2.3$. Among these, $Li_\ell Co_m M_{1-m} O_n$ is preferred.

Examples of olivine-type lithium phosphates include $LiXPO_4$ and $Li_2 XPO_4 F$, where X represents at least one element selected from the group consisting of Co, Ni, Mn, and Fe.

The number of moles of lithium in each formula above representing a lithium-containing composite oxide or olivine-type lithium phosphate is a value measured immediately after the positive electrode active material is produced, and increases or decreases during charging and discharging. The positive electrode active materials may be used singly or in combination of two or more.

The positive electrode active material layer 31 b is formed by, for example, dissolving or dispersing a positive electrode active material, a binder, a conductive agent, and the like in an organic solvent, to prepare a positive electrode material mixture slurry, applying the prepared slurry onto the surface of the positive electrode current collector 31 a, and drying and rolling the resultant coating.

For the binder, for example, resin materials, rubber materials, and water-soluble polymer materials may be used. Examples of resin materials include polyvinylidene fluoride, polytetrafluoroethylene, polyethylene, polypropylene, aramid resin, polyamide, polyimide, polyamide-imide, polyacrylonitrile, polyacrylic acid, polymethyl acrylate, polyethyl acrylate, polyhexyl acrylate, polymethacrylic acid, polymethyl methacrylate, polyethyl methacrylate, polyhexyl methacrylate, polyvinyl acetate, polyvinylpyrrolidone, polyether, polyether sulfone, and polyhexafluoropropylene. Examples of rubber materials include styrenebutadiene rubber and modified acrylic rubber. Examples of water-soluble polymer materials include carboxymethyl cellulose.

A copolymer containing two or more monomer compounds may be also used as the resin material. Examples of the monomer compounds include tetrafluoroethylene, perfluoroalkylvinylether, vinylidene fluoride, chlorotrifluoroethylene, ethylene, propylene, hexafluoropropylene, pentafluoropropylene, fluoromethylvinylether, acrylic acid, and hexadiene.

These binders may be used singly or in combination of two or more.

For the conductive agent, for example, graphites such as natural graphite and artificial graphite; carbon blacks such as acetylene black, Ketjen black, channel black, furnace black, lamp black, and thermal black; conductive fibers such as carbon fiber and metal fiber; metal powders such aluminum powder; conductive whiskers such as zinc oxide whisker and potassium titanate whisker, conductive metal oxides such as titanium oxide; organic conductive materials such as phenylene derivatives; and fluorinated carbon may be used. These conductive agents may be used singly or in combination of two or more.

For the organic solvent, for example, dimethylformamide, dimethylacetamide, methylformamide, N-methyl-2-pyrrolidone, dimethylamine, acetone, and cyclohexanone may be used.

The separator 34 is an ion-permeable insulating layer interposed between the positive electrode 31 and the negative electrode 1. Part of the surface of the separator 34 in the side of the negative electrode 1 may be in contact with the surface of the polymer layer 15.

The separator 34 may be a porous sheet having pores and predetermined levels of properties such as ion permeability, mechanical strength, and insulating property. Examples of the porous sheet include microporous film, woven fabric, and non-woven fabric. The microporous film may be of a single-layer film or a multi-layer film. The single-layer film is made of one material. The multi-layer film is a laminate of two or more single-layer films. The multi-layer film may be, for example, a laminate of two or more single-layer films made of the same material, or a laminate of two or more single-layer films made of different materials. Alternatively, the multi-layer film may be a laminate of two or more of microporous film, woven fabric, non-woven fabric, and the like.

Although various resin materials may be used as the material for the separator 34, it is preferable to use polyolefin such as polyethylene and polypropylene, in view of the durability and shutdown function of the separator 34, the safety of the battery, and other factors. The thickness of the separator 34 is usually 5 to 300 $\mu$m, and preferably 10 to 40 $\mu$m. The porosity of the separator 34 is preferably 30 to 70%, and more preferably 35 to 60%. The porosity is a percentage of the total volume of the pores in the separator 34 to the volume of the separator 34. The porosity can be measured, for example, with a mercury porosimeter.

The separator 34 is impregnated with a non-aqueous electrolyte with lithium ion conductivity. The non-aqueous electrolyte used here is a liquid non-aqueous electrolyte. The liquid non-aqueous electrolyte includes a solute (a supporting salt) and a non-aqueous solvent, and includes various additives, as appropriate.

For the solute, any known solute in the field of non-aqueous electrolyte secondary batteries may be used. Examples of the solute include $LiClO_4$, $LiBF_4$, $LiPF_6$, $LiAlC_4$, $LiSbF_6$, $LiSCN$, $LiCF_3SO_3$, $LiCF_3CO_2$, $LiAs_F_6$, $LiB_{10}Cl_{10}$, lithium lower aliphatic carboxylates, LiCl, LiBr, LiI, $LiBCl_4$, borates, and imide salts.

Examples of borates include lithium bis(1,2-benzenediolato(2-)-O,O')borate, lithium bis(2,3-naphthalenediolato(2-)-O,O')borate, lithium bis(2,2'-biphenyldiolato(2-)-O,O')borate, and lithium bis(5-fluoro-2-olato-1-benzene sulfonato(2-)-O,O')borate. Examples of imide salts include $(CF_3SO_2)_2NLi$, $(CF_3SO_2)(C_4F_9SO_2)NLi$, and $(C_2F_5SO_2)_2NLi$. These solutes may be used singly or in combination of two or more. The concentration of the solute in the non-aqueous solvent is preferably 0.5 to 2 mol/L.

Examples of the non-aqueous solvent include cyclic carbonic acid esters, chain carbonic acid esters, cyclic carboxylic acid esters, and the like. Examples of cyclic carbonic acid esters include propylene carbonate, ethylene carbonate, and the like. Examples of chain carbonic acid esters include diethyl carbonate, ethyl methyl carbonate, dimethyl carbonate, and the like. Examples of cyclic carboxylic acid esters include $\gamma$-butyrolactone, $\gamma$-valerolactone, and the like. These non-aqueous solvents may be used singly or in combination of two or more.

The additive includes, for example, an additive (A) for improving the charge-discharge efficiency, and an additive (B) for inactivating the battery. Examples of the additive (A) include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinylethylene carbonate, and divinylethylene carbonate. In these compounds, some of hydrogen atoms may be substituted by fluorine atoms. These additives (A) may be used singly or in combination of two or more.

Examples of the additive (B) include benzene derivatives. The benzene derivatives are exemplified by a benzene compound having a phenyl group and a cyclic compound group adjacent to the phenyl group. The cyclic compound group is, for example, a phenyl group, a cyclic ether group, a cyclic ester group, a cycloalkyl group, or a phenoxy group. Examples of the benzene compound include cyclohexyl benzene, biphenyl, and diphenyl ether. These additives (B) may be used singly or in combination of two or more. The content of the additive(s)(B) in the liquid non-aqueous electrolyte is preferably equal to or less than 10 parts by volume per 100 parts by volume of the non-aqueous solvent.

A gelled non-aqueous electrolyte may be used in place of the liquid non-aqueous electrolyte. The gelled non-aqueous electrolyte includes a liquid non-aqueous electrolyte and a resin material. Examples of the resin material include polyvinylidene fluoride, polyacrylonitrile, polyethylene oxide, polyvinyl chloride, and polyacrylate.

Although the separator 34 is used as the lithium ion-permeable insulating layer in this embodiment, this is not a limitation, and an inorganic oxide particle layer may also be used. The separator 34 may be used in combination with an inorganic oxide particle layer. The inorganic oxide particle layer functions as the lithium ion-permeable insulating layer and improves the safety of the non-aqueous electrolyte battery 3 in the event of short circuiting. Using the separator 34 in combination with an inorganic oxide particle layer significantly improves the durability of the separator 34. The inorganic oxide particle layer may be formed on at least one of the surface of the positive electrode active material layer 31 b and the surface of the negative electrode active material layer 12, but is preferably formed on the surface of the positive electrode active material layer 31b.

The inorganic oxide particle layer includes a particulate inorganic oxide and a binder. Examples of the inorganic oxide include alumina, titania, silica, magnesia, and calcia. For the binder, the same binder as used in forming the positive electrode active material layer 31b may be used. The particulate inorganic oxides may be used singly or in combination of two or more; and the binders may be used singly or in combination of two or more. The content of the particulate inorganic oxide(s) in the inorganic oxide particle layer is preferably 90 to 99.5% by mass of the total mass of the inorganic oxide particle layer, and more preferably 95 to 99% by mass, with the balance being the binder.

The inorganic oxide particle layer can be formed in the same manner as the positive electrode active material layer 31b. For example, the inorganic oxide particle layer is formed by dissolving or dispersing a particulate inorganic oxide and a binder in an organic solvent to prepare a slurry, applying the prepared slurry onto the surface of the positive electrode active material layer 31b or the negative electrode active material layer 12, and then drying the resultant coating. The organic solvent used here may be the same organic solvent as included in the positive material mixture slurry. The thickness of the inorganic oxide particle layer is preferably 1 to 10 $\mu$m.

Although the separator 34 is used as the lithium ion-permeable insulating layer in this embodiment, a solid electrolyte layer may be used in place of the separator 34. The solid electrolyte layer includes a solid electrolyte. Examples of the solid electrolyte are classified into inorganic solid electrolytes and organic solid electrolytes.

Examples of the inorganic solid electrolytes include sulfide-based solid electrolytes such as $(Li_3PO_4)_x$-$(Li_2S)_y$-$(SiS_2)_z$ glass, $(Li_2S)_x$-$(SiS_2)_y$, $(Li_2S)_x(P_2S_5)_y$, $Li_2S$-$P_2S_5$, and thio-LISICON; oxide-based solid electrolytes such as $LiTi_2(PO_4)_3$, $LiZr_2(PO_4)_3$, $LiGe_2(PO_4)_3$, and $(La_{0.5+x}Li_{0.5-3x})TiO_3$; LiPON; $LiNbO_3$; $LiTaO_3$; $Li_3PO_4$; $LiPO_{4-x}N_x$, where $0 < x \leq 1$; LiN; Lil; and LISICON. The solid electrolyte layer including an inorganic solid electrolyte can be formed by, for example, vapor deposition, sputtering, laser ablation, gas deposition, or aerosol deposition.

Examples of the organic solid electrolyte include ion conductive polymers and polymer electrolytes. The ion conductive polymers are exemplified by polyether with low phase-transition temperature (Tg), amorphous vinylidene fluoride copolymer, and blends of different polymers. The polymer electrolytes are composed of a matrix polymer and a lithium salt. The matrix polymer may be, for example, polyethylene oxide, polypropylene oxide, a copolymer of ethylene oxide and propylene oxide, or polycarbonate. The lithium salt may be the same lithium salt as included in the liquid non-aqueous electrolyte.

Although the description is made in this embodiment with reference to the non-aqueous electrolyte secondary battery 3 including a stacked electrode assembly, this is not a limitation, and the non-aqueous electrolyte secondary battery of the present invention may include a wound electrode assembly or a flat electrode assembly. The wound electrode assembly is an electrode assembly obtained by winding a positive electrode and a negative electrode with a lithium ion-permeable insulating layer interposed therebetween. The flat electrode assembly is an electrode assembly obtained by, for example, press-molding a wound electrode assembly into a flat shape. Alternatively, the flat electrode assembly may be formed by winding around a plate a positive electrode and a negative electrode with a lithium ion-permeable insulating layer interposed therebetween.

The shape type of the non-aqueous electrolyte secondary battery of the present invention includes a cylindrical type, a prismatic type, a flat type, a coin type, and a laminate film pack type.

Examples

The present invention is specifically described below with reference to Examples, Comparative Examples, and Test Examples.

(Example 1)

(1) Preparation of positive electrode active material

To an aqueous nickel sulfate solution, cobalt sulfate was added such that Ni:Co = 8.5:1.5 (molar ratio), to prepare an aqueous solution having a metal ion concentration of 2 mol/L. To the resultant aqueous solution while being stirred, an aqueous 2 mol/L sodium hydroxide solution was gradually added dropwise to neutralize the solution, thereby to form a binary precipitate represented by $Ni_{0.85}Co_{0.15}(OH)_2$ by coprecipitation. The precipitate was collected by filtration, washed with water, and dried at 80°C, to give a composite hydroxide.

The resultant composite hydroxide was heated at 900°C in air for 10 hours, to give a composite oxide represented by $Ni_{0.85}Co_{0.15}0$. Subsequently, the composite oxide was mixed with a monohydrate of lithium hydroxide such that the total number of Ni and Co atoms became equal to the number of Li atoms, and heated at 800°C in air for 10 hours, whereby a lithium-nickel-containing composite oxide being represented by $LiNi_{0.85}Co_{0.15}O_2$ and comprising secondary particles having an volumetric average particle diameter of 10 $\mu$m was obtained as a positive electrode active material.

(2) Production of positive electrode

First, 93 g of the positive electrode active material powder obtained in the above, 3 g of acetylene black (conductive agent), 4 g of polyvinylidene fluoride powder (binder), and 50 mL of N-methyl-2-pyrrolidone were mixed sufficiently to prepare a positive electrode material mixture slurry. The positive electrode material mixture slurry thus prepared was applied onto both surfaces of a 15-$\mu$m-thick aluminum foil (positive electrode current collector), then dried and rolled, to form a positive electrode active material layer having a thickness of 120 $\mu$m. The obtained positive electrode was cut in the size of 15 mm x 15 mm, on which a lead-attaching portion of 5 mm x 5 mm in size was provided by removing the positive electrode active material layer therefrom. A positive electrode plate was thus produced.

(3) Production of negative electrode

[Production of negative electrode current collector]

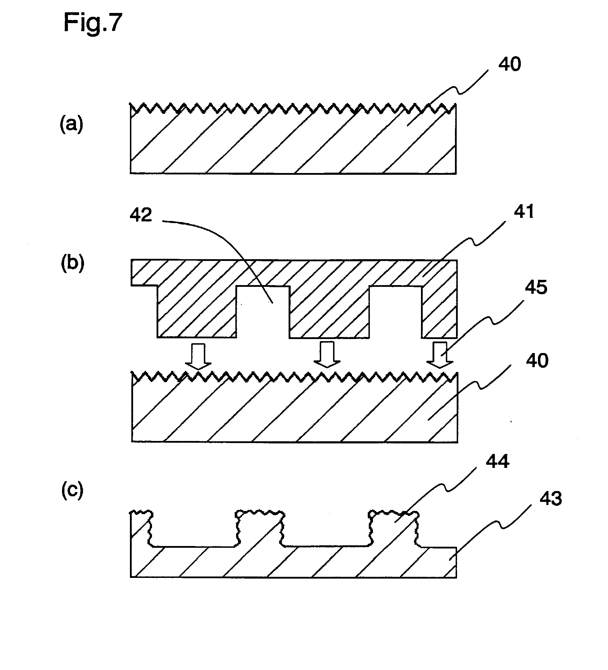

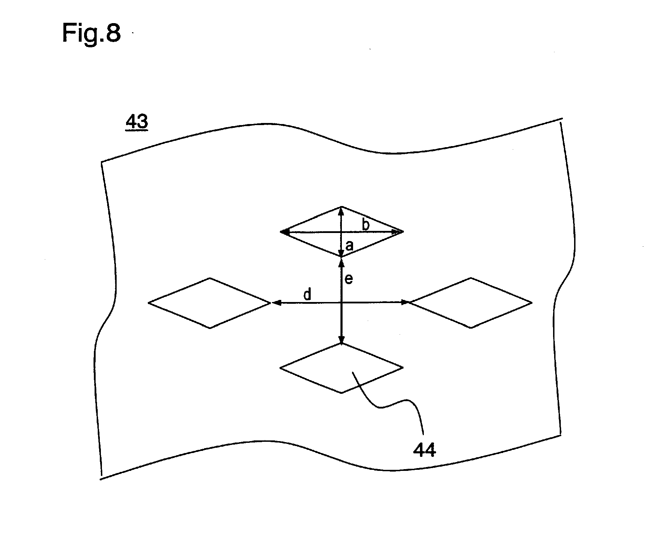

A description is given first of a production method of a negative electrode current collector. Fig. 7 is a set of diagrams showing the steps of a production method of a negative electrode current collector 43. Fig. 8 is a top view schematically showing the configuration of an essential part of the negative electrode current collector 43 obtained by the production method of the negative electrode current collector 43 shown in Fig. 7.

The production method of the negative electrode current collector 43 shown in Fig. 7 includes the steps (a) and (b). In Fig. 7, the steps (a) and (b) are shown in a longitudinal cross sectional diagram.

In the step (a), one surface of a 27-$\mu$m-thick copper foil (trade name: HCL-02Z, available from Hitachi Cable, Ltd.) was roughened by electroplating, so that a plurality of copper particles (particle diameter: 1 $\mu$m) were attached on the surface. In such a manner, a surface-roughened copper foil 40 having a surface roughness Rz of 1.5 $\mu$m was obtained. The surface roughness Rz is a ten-point average roughness Rz specified in the Japanese Industrial Standard (JISB 0601-1994). A commercially available surface-roughened copper foil for printed circuit board may be used instead.

In the step (b), a plurality of recesses 42 were formed on the surface of a ceramic roller 41 by laser engraving. The recesses 42 were formed so that each of them had the shape of a rhombus when viewed perpendicularly to the surface of the ceramic roller 41. The lengths of the short diagonal and the long diagonal of the rhombus were 10 $\mu$m and 20 $\mu$m, respectively. The distances between adjacent recesses 42 along the short diagonal and the long diagonal were 18 $\mu$m and 20 $\mu$m, respectively. The depth of each recess 42 was 10 $\mu$m. The ceramic roller 41 and a stainless steel roller with smooth surface were press-fitted with the axes of the two rollers being arranged parallel to each other so that a press fit portion was formed therebetween. The surface-roughened copper foil 40 was passed through the press fit portion between the two rollers at a line pressure of 1 t/cm, and was thus rolled. Specifically, the roughened surface of the surface-roughened copper foil 40 was pressed with the ceramic roller 41, in the direction indicated by an allow 45.

The negative electrode current collector 43 with a plurality of protrusions 44 formed on its surface as shown in Fig. 7(c) was thus obtained. In this process, on the surface of the surface-roughened copper foil 40 having been passed through between the rollers, regions having been pressed by faces of the ceramic roller 41 where no recess 42 was formed were flattened. Regions on the surface of the surface-roughened copper foil 40 corresponding to the recesses 42 were not flattened and entered the internal spaces of the recesses 42, forming the protrusions 44. The height of the protrusions 44 was smaller than the depth of the recesses 42, and was about 8 $\mu$m.

In the negative electrode current collector 43, the protrusions 44 each having an approximate rhombus shape were arranged in a staggered pattern as shown in Fig. 8. The lengths of the short diagonal "a" and the long diagonal "b" of the protrusion 44 were about 10 $\mu$m and about 20 $\mu$m, respectively. The distance "e" between adjacent protrusions 44 along the short diagonal "a" and the distance "d" between adjacent protrusions 44 along the long diagonal "b" were 18 $\mu$m and 20 $\mu$m, respectively.

[Formation of negative electrode active material]

The negative electrode current collector 43 obtained in the above was cut in the size of 2 cm x 10 cm, and fixed on the support table 23 disposed inside the vacuum chamber 21 of the electron beam vapor deposition apparatus 20 as shown in Fig. 4. While oxygen gas with 99.7% purity was being supplied into the vacuum chamber 21, electron beam vapor deposition was performed using a vapor deposition unit (a unit comprising the target 25, the electron beam generator 30, and a deflection yoke) and using silicon as an evaporation source. For evaporating silicon being an evaporation source, electron beams generated from the electron beam generator 30 were deflected by the deflection yoke, and irradiated to the evaporation source. For the evaporation source, a scrap material being a by-product in semiconductor wafer production (scrap silicon: 99.999% purity) was used.

Prior to vapor deposition, the support table 23 was tilted such that the vapor deposition angle (incident angle) ω was 70°. In this state, vapor deposition was performed at a film-forming rate of about 8 nm/s and an oxygen flow rate of 5 sccm, to form first masses of 2.5 μm in height. Subsequently, the support table 23 was turned clockwise around the center axis so as to be tilted in the direction symmetrical to the tilted direction of the support table 23 in the vapor deposition for forming the first masses, so that the vapor deposition angle was -70°. In this state, second masses were formed.

Thereafter, the support table 23 was tilted in the same direction as that in the vapor deposition for forming the first masses, so that the vapor deposition angle was 70°, and in this state, third masses were formed. In forming the subsequent fourth to twentieth masses, vapor deposition was performed while the vapor deposition angle ω was switched alternately between -70° and 70°, and thereby a plurality of columns each comprising a stack of masses were formed. The average height of the columns was 22 μm. The gap width was 4 μm to 10 μm. Film portions of about 2 μm in thickness were formed on regions of the surface of the negative electrode current collector 43 on which no column was formed. The negative electrode active material layer was formed in such a manner, and the negative electrode was thus produced. The average molar ratio of the oxygen amount to the silicon amount in the negative electrode active material layer thus obtained was 0.5.

Lithium was vapor deposited on the negative electrode obtained in the above. The amount of vapor deposited lithium was set to be equivalent to the irreversible capacity, specifically to 9 μm. This negative electrode was cut in the size of 16 mm x 16 mm, on which a lead-attaching portion of 5 mm x 5 mm was provided by removing the negative electrode active material layer therefrom. A negative electrode plate was thus prepared.

(4) Formation of polymer layer

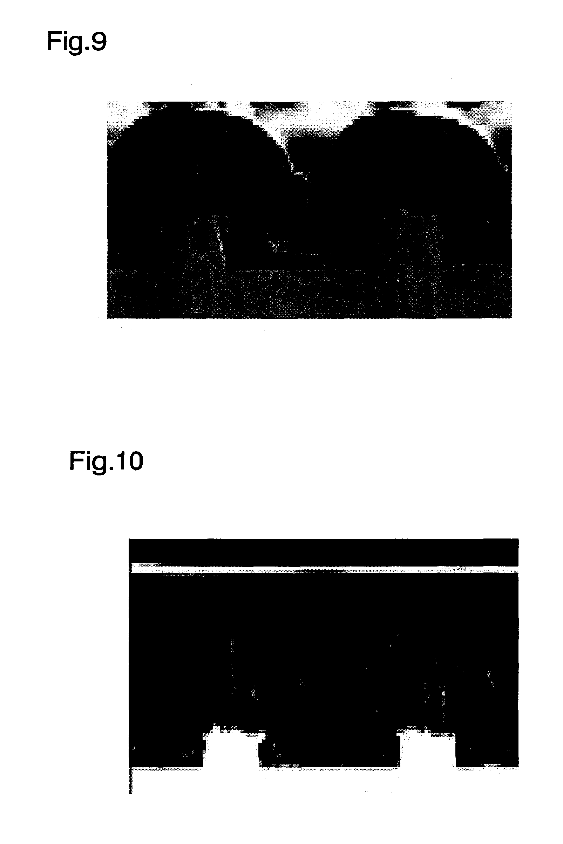

PVDF (molecular weight: 400000) was dissolved in N-methyl-2-pyrrolidone, to prepare a solution in which the PVDF concentration was 4% by mass. The solution was heated to 80°C, in which the negative electrode plate prepared in the above was immersed. After immersion for 1 minute, the negative electrode plate was taken out and then dried under vacuum at 85°C for 10 minutes, to finish the negative electrode plate. A cross section of the negative electrode plate in its thickness direction was observed under a scanning electron microscope. Fig. 9 is an electron micrograph of a cross-section of the negative electrode obtained in Example 1. It is clear from Fig. 9 that a polymer layer was formed on the outer surfaces of the columns and on the outer surfaces of the film portions formed on the regions of the surface of the negative electrode current collector on which no column was formed. The thickness of the polymer layer was about 2 μm, and the porosity thereof was 30%.

(5) Fabrication of stacked battery

The positive electrode plate obtained in the above and the negative electrode plate with the polymer layer formed thereon were stacked with a polyethylene microporous film (separator, trade name: Hipore, 20 μm in thickness, available from Asahi Kasei Corporation) interposed therebetween, to form a stacked electrode assembly. One end of a positive electrode lead made of aluminum was welded to the lead-attaching portion of the positive electrode plate, and one end of a negative electrode lead made of nickel was welded to the lead-attaching portion of the negative electrode plate.

The electrode assembly thus obtained was inserted into a housing case made of aluminum laminate film, and a non-aqueous electrolyte was injected into the housing case. For the non-aqueous electrolyte, a non-aqueous electrolyte obtained by dissolving $LiPF_6$ at a concentration of 1.0 mol/L in a mixed solvent containing ethylene carbonate and ethyl methyl carbonate at a ratio of 1:1 by volume was used. Next, the positive electrode lead and the negative electrode lead were extended outside the housing case through the openings of the housing case, respectively. The openings of the housing case were welded while the internal pressure in the housing case was reduced to a near vacuum. A non-aqueous electrolyte secondary battery of laminate film pack type was thus fabricated.

(Example 2)

A negative electrode and a non-aqueous electrolyte secondary battery were produced in the same manner as in Example 1, except that the a VDF (vinylidene fluoride) - HFP (hexafluoropropylene) copolymer in which the HFP content was 3% by mass was used as a synthetic resin for forming a polymer layer, in place of the PVDF. The negative electrode thus produced was observed under a scanning electron microscope. The result found that: a polymer layer was formed on the side surfaces of the columns and on the outer surfaces of the film portions; and gaps were present between the columns with the polymer layer formed on the side surfaces thereof. The thickness of the polymer layer was about 2 μm, and the porosity thereof was 32%.

(Example 3)

A negative electrode and a non-aqueous electrolyte secondary battery were produced in the same manner as in Example 1, except that the a VDF-HFP copolymer in which the HFP content was 12% by mass was used as a synthetic resin for forming a polymer layer, in place of the PVDF. The negative electrode thus produced was observed under a scanning electron microscope. The result found that: a polymer layer was formed on the side surfaces of the columns and on the outer surfaces of the film portions; and gaps were present between the columns with the polymer layer formed on the side surfaces thereof. The thickness of the polymer layer was about 2 $\mu$m, and the porosity thereof was 28%.

(Example 4)

In preparing a polymer solution, diethyl carbonate was used as the solvent, and a VDF-HFP copolymer in which the HFP content was 12% by mass was used as the polymer material. Further, propylene carbonate was added to the polymer solution such that the content of propylene carbonate was 15% by mass of the total mass of the polymer solution. The concentration of the VDF-HFP copolymer in the polymer solution was 4% by mass. The negative electrode plate was immersed in the polymer solution (80°C), then taken out, and dried at room temperature for 10 minutes. A non-aqueous electrolyte secondary battery was fabricated in the same manner as in Example 1, except that the negative electrode plate thus obtained was used.

The obtained negative electrode was observed under a scanning electron microscope. The result found that: a polymer layer of about 0.5 $\mu$m in thickness was formed on part of the side surfaces of the columns and on the outer surfaces of the film portions, and in addition, a polymer layer of about 6 $\mu$m in thickness was formed on the top surfaces of the columns. The porosity of these polymer layers was 21 %.

The polymer layer was formed not only on the side surfaces of the columns but also on the top surfaces of the columns presumably because propylene carbonate being a high boiling point solvent was added as the solvent of the polymer solution. As is clear from the above, the area on which the polymer layer is to be formed can be controlled by changing the composition of the polymer solution as appropriate.

(Comparative Example 1)

A negative electrode and a non-aqueous electrolyte secondary battery were produced in the same manner as in Example 1, except that no polymer layer was formed.

(Comparative Example 2)

A negative electrode and a non-aqueous electrolyte secondary battery were produced in the same manner as in Example 1, except that the PVDF concentration in the polymer solution was changed to 8% by mass. The negative electrode thus produced was observed under a scanning electron microscope. Fig. 10 is an electron micrograph of a cross-section of the negative electrode obtained in Comparative Example 2. It is clear from Fig. 10 that the polymer layer entered the gaps between the columns, causing most of the gaps to disappear. The porosity of the polymer layer was 2%.

(Test Example 1)

The non-aqueous electrolyte secondary batteries of Examples 1 to 4 and Comparative Examples 1 to 2 were subjected to evaluation tests as described below. The evaluation tests were performed in an environment of 20°C. The results are shown in Table 1.

[Battery capacity evaluation]

With respect of each of the batteries, three charge/discharge cycles each consisting of charging (a constant current charge and a subsequent constant voltage charge) and discharging (a constant current discharge) were performed under the following conditions, to measure a discharge capacity (0.2 C capacity) at the third cycle.
Constant current charge: Charge current 0.7 C, Charge cutoff voltage 4.2 V
Constant voltage charge: Charge voltage 4.2 V, Charge cutoff current 0.05 C, Interval time between charge and subsequent discharge 20 minutes
Constant current discharge: Discharge current 0.2 C, Discharge cutoff voltage 2.5 V, Interval time between discharge and subsequent charge 20 minutes

[High output characteristic evaluation]

With respect of each of the batteries, one charge/discharge cycle was performed under the same charge/ discharge conditions as in the battery capacity evaluation, except that the discharge current in the constant current discharge was changed from 0.2 C to 1 C, to measure a 1C capacity. The rate of the 1 C capacity to the 0.2 C capacity measured in the battery capacity evaluation was calculated as a percentage, which was defined as a high output characteristic (rate characteristic, %).

[Cycle characteristic evaluation]

With respect to each of the batteries, one charge/discharge cycle was performed under the same charge/ discharge conditions as in the battery capacity evaluation, to measure a 1st cycle discharge capacity. Thereafter, 98 charge/discharge cycles were performed under the same charge/discharge conditions as in the 1st cycle, except that the discharge current in the constant current discharge was changed from 0.2 C to 1 C. Thereafter, a charge/discharge cycle was performed under the same charge/discharge conditions as in the 1st cycle, to measure a 100th cycle discharge capacity. The rate of the 100th cycle discharge capacity to the 1st cycle discharge capacity was calculated as a percentage, which was defined as a cycle capacity retention rate (%).

[Battery swelling]

In the cycle characteristic evaluation, the thicknesses of the electrode assembly before evaluation and after 100 cycles were measured. A battery swelling (%) was calculated as a change rate of the thickness (X) of the electrode assembly before evaluation with respect to the thickness (Y) of the electrode assembly after 100 cycles.

$$\text{Battery swelling (\%)} = [(Y\text{-}X) / X] \times 100$$

[Table 1]

|  | High output characteristics (%) | Cycle characteristic (%) | Battery swelling (%) |
|---|---|---|---|
| Example 1 | 90 | 95 | 6 |
| Example 2 | 92 | 94 | 7 |
| Example 3 | 94 | 94 | 6 |
| Example 4 | 94 | 93 | 3 |
| Comparative Example 1 | 94 | 89 | 10 |
| Comparative Example 2 | 20 | - | - |

Table 1 shows that in the case where the gaps between the columns were filled with the polymer layer as in Comparative Example 2, the output characteristics of the battery deteriorated significantly. Even though only 100 cycles were performed, the difference between the cycle characteristics of the example batteries and the comparative example batteries amounted to 3 to 6%. In the actual use of the battery, at least several hundred charge/discharge cycles will be performed, and thus the difference will be more evident, amounting to several ten % or more.
With regard to the battery swelling also, the effect of the present invention was shown. Based on the foregoing results, it is clear that in the non-aqueous electrolyte secondary battery of the present invention, the cycle characteristics are improved and the high output characteristics are ensured, and in addition, the battery swelling is suppressed.
Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Acoordingly, it is intended that the appended claims be interpreted as covering all alterations and modifications as fall within the true spirit and scope of the invention.

[Industrial Applicability]

The non-aqueous electrolyte secondary battery of the present invention is applicable for the same applications as those of the conventional non-aqueous electrolyte secondary batteries, and is particular useful as a main power source or auxiliary power source for electronic equipment, electric equipment, machining equipment, transportation equipment, power storage equipment, and the like. Examples of the electronic equipment include personal computers, cellular phones, mobile devices, personal digital assistants, portable game machines, and the like. Examples of the electric equipment include vacuum cleaners, video cameras, and the like. Examples of the machining equipment include electric tools, robots, and the like. Examples of the transportation equipment include electric vehicles, hybrid electric vehicles, plug-in HEVs, fuel cell-powered vehicles, and the like. Examples of the power storage equipment include uninterrupted power supplies, and the like.

**Claims**

1. A negative electrode for a non-aqueous electrolyte secondary battery comprising: a negative electrode current collector, and a plurality of columns of alloy-formable active material being capable of absorbing and desorbing lithium ions and being supported on a surface of the negative electrode current collector so as to extend outward, wherein
the columns of alloy-formable active material are supported on the surface of the negative electrode current collector with a predetermined spacing held between the columns of alloy-formable active material adjacent to each other, an outer surface of each of the columns of alloy-formable active material is coated with a polymer layer including a lithium-ion permeable resin, and
the polymer layer has a thickness capable of leaving gaps unfilled, the gaps being formed between the columns of alloy-formable active material adjacent to each other.

2. The negative electrode for a non-aqueous electrolyte secondary battery in accordance with claim 1, wherein the polymer layer has a porosity of 10% to 70%.

3. The negative electrode for a non-aqueous electrolyte secondary battery in accordance with claim 1, wherein the polymer layer is a layer including a fluorocarbon resin and a lithium salt.

4. The negative electrode for a non-aqueous electrolyte secondary battery in accordance with claim 1, wherein the polymer layer has a thickness of 0.01 $\mu$m to 20 $\mu$m.

5. The negative electrode for a non-aqueous electrolyte secondary battery in accordance with claim 1, wherein the columns of alloy-formable active material have an average height within the range of 1 $\mu$m to 30 $\mu$m.

6. The negative electrode for a non-aqueous electrolyte secondary battery in accordance with claim 1, wherein the gaps has a width within the range of 0.5 $\mu$m to 30 $\mu$m.

7. The negative electrode for a non-aqueous electrolyte secondary battery in accordance with claim 1, wherein the negative electrode current collector has a plurality of protrusions on the surface thereof, and the plurality of columns of alloy-formable active material are supported on surfaces of the protrusions.

8. The negative electrode for a non-aqueous electrolyte secondary battery in accordance with claim 1, wherein the negative electrode further includes a plurality of films of alloy-formable active material formed on regions of the surface of the negative electrode current collector, the regions not supporting the columns of alloy-formable active material.

9. The negative electrode for a non-aqueous electrolyte secondary battery in accordance with claim 8, wherein an outer surface of each of the films of alloy-formable active material is coated with the polymer layer.

10. The negative electrode for a non-aqueous electrolyte secondary battery in accordance with claim 8, wherein the surface of the negative electrode current collector includes regions supporting neither the columns of alloy-formable active material nor the films of alloy-formable active material, and the regions are coated with the polymer layer.

11. The negative electrode for a non-aqueous electrolyte secondary battery in accordance with claim 1, wherein the alloy-formable active material is at least one selected from a silicon-based active material and a tin-based active material.

12. A non-aqueous electrolyte secondary battery comprising: a positive electrode capable of absorbing and desorbing lithium ions, a negative electrode capable of absorbing and desorbing lithium ions, a lithium ion-permeable insulating layer interposed between the positive electrode and the negative electrode, and a lithium ion-conductive non-aqueous electrolyte,
wherein
the negative electrode is the negative electrode for a non-aqueous electrolyte secondary battery of claim 1.

## Fig.1

<u>1</u>

## Fig.2

<u>10</u>

EP 2 262 041 A1

Fig.3

13h
13g
13f
13e
13d
13c
13b
13a
} 13

12

14 10a
10
11

22

Fig.4

Fig.5

Fig.6

# Fig.7

(a)

40

(b)

42
41
45
40

(c)

44
43

ЕР 2 262 041 A1

Fig.8

26

Fig.9

Fig.10

## INTERNATIONAL SEARCH REPORT

| | International application No. |
|---|---|
| | PCT/JP2010/000975 |

**A. CLASSIFICATION OF SUBJECT MATTER**
*H01M4/13(2010.01)i, H01M4/134(2010.01)i*

According to International Patent Classification (IPC) or to both national classification and IPC

**B. FIELDS SEARCHED**

Minimum documentation searched (classification system followed by classification symbols)
H01M4/00-4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-300255 A  (Panasonic Corp.), 11 December 2008 (11.12.2008), claims; fig. 2 & WO 2008/149492 A1 | 1-12 |
| A | JP 2007-280781 A  (Sony Corp.), 25 October 2007 (25.10.2007), claims 1, 11 (Family: none) | 1-12 |
| A | JP 2008-103148 A  (Sony Corp.), 01 May 2008 (01.05.2008), claims; paragraph [0021] (Family: none) | 1-12 |

☒ Further documents are listed in the continuation of Box C.        ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 April, 2010 (21.04.10) | 11 May, 2010 (11.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 262 041 A1

**INTERNATIONAL SEARCH REPORT**

International application No.

PCT/JP2010/000975

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2009-104892 A (Panasonic Corp.),<br>14 May 2009 (14.05.2009),<br>claims 1, 3<br>& US 2009/0104515 A1 & CN 101373846 A<br>& KR 10-2009-0041329 A | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005197258 A